# EUROPEAN PATENT SPECIFICATION

(11) **EP 2 151 333 B1**
(45) Date of publication and mention of the grant of the patent: **15.06.2011**
(21) Application number: 09166569.5
(22) Date of filing: 28.07.2009
(51) Int. Cl.: B60C 11/03

(54) **Pneumatic tire**
Luftreifen
Pneu

(30) Priority: 05.08.2008 JP 2008201512; 03.06.2009 JP 2009134164
(43) Date of publication of application: 10.02.2010
(73) Proprietor: The Yokohama Rubber Co., Ltd., Minato-ku Tokyo 105-8685 (JP)
(72) Inventor: Kojima, Hiroyuki, Kanagawa 254-8601 (JP); Hirose, Katsumi, Kanagawa 254-8601 (JP)
(74) Representative: HOFFMANN EITLE

(56) References cited:
- EP-A- 1 029 712
- EP-A- 1 541 381
- WO-A-2006/007877
- DE-U1- 20 216 992
- JP-A- 2005 053 311
- US-A- 5 714 026
- US-A1- 2002 139 460

## Description

### BACKGROUND OF THE INVENTION

### FIELD OF THE INVENTION

The present invention relates to a pneumatic tire, and more specifically to a pneumatic tire capable of improving driving stability on a dry road surface.

### DESCRIPTION OF THE RELATED ART

Heretofore, there has been known the following type of a pneumatic tire designed to be mounted in a specific tire mounting direction to cause a designated side of the pneumatic tire to face outside of a vehicle. In the pneumatic tire, a first circumferential-direction main groove is placed in an outer region of a tread surface located at an outer side of a tire equatorial plane in the tire mounting direction, and a circumferential-direction narrow groove having a smaller width than the first circumferential-direction main groove is placed at an outer side of the first circumferential-direction main groove in the tire width direction (see Japanese patent application *Kokai* publication No. 2006-143040, for Example). Placing the circumferential-direction narrow groove as described above has an advantage of increasing the tread stiffness in the outer region of the tread surface, which largely affects driving stability on a dry road surface, and thus increasing driving stability while running on a dry road surface. Document DE-U-202 16 992 discloses the features of the preamble of claim 1.

Recently, there has been a demand for further improving the safety of a pneumatic tire, as a vehicle has been improved in performance. A pneumatic tire having the above structure is no exception, and thus has been required to have improved safe performance. However, if such a pneumatic tire is improved in driving stability on a dry road surface to meet such a demand, the improvement makes the pneumatic tire deteriorated in driving stability on a wet road surface. As described above, a conventional pneumatic tire having the above structure has a problem of having difficulty in balancing driving stability on a dry road surface and driving stability on a wet road surface.

### SUMMARY OF THE INVENTION

An object of the present invention is to provide a pneumatic tire capable of improving driving stability on a dry road surface while suppressing reduction in driving stability on a wet road surface.

To achieve the above object, a pneumatic tire designed to be mounted in a specific tire mounting direction to cause a designated side of the pneumatic tire to face outside of a vehicle includes a first circumferential-direction main groove, a circumferential-direction narrow groove and first lateral grooves. The first circumferential-direction main groove placed in an outer region of a tread surface which is located at an outer side of a tire equatorial plane in the tire mounting direction. The circumferential-direction narrow groove has a smaller width than the first circumferential-direction main groove, and is placed at an outer side of the first circumferential-direction main groove in a tire width direction. The first lateral grooves are provided in an outer region with respect to the circumferential-direction narrow groove in the tire width direction so as to be placed side by side_at predetermined equal intervals in the tire circumferential direction. Each of the first lateral grooves extends in the tire width direction across a contact patch edge of the pneumatic tire. The first lateral grooves are separated from the circumferential-direction narrow groove, so that an outer land portion with respect to the circumferential-direction narrow groove in the tire width direction is formed as a rib. Each of the first lateral grooves is formed by contiguously connecting a first arcuate groove portion, which is convex toward one side in the tire circumferential direction, and a second arcuate groove portion, which is convex toward the other side in the tire circumferential direction.

According to the present invention described above, the first lateral grooves are separated from the circumferential-direction narrow groove, so that the outer land portion with respect to the circumferential-direction narrow groove in the tire width direction is formed as the rib. This can increase the tread stiffness in the tire circumferential direction, and thus can increase driving stability on a dry road surface.

Meanwhile, each of the first lateral grooves is formed by contiguously connecting the first arcuate groove portion, which is convex toward one side in the tire circumferential direction, and the second arcuate groove portion, which is convex toward the other side in the tire circumferential direction. This makes the first lateral groove longer than a lateral groove which is convex only toward one side. Here, the length of each first lateral groove is considered to be reduced by a distance by which the first lateral groove is separated from the circumferential-direction narrow groove. However, the above-described shape of the first lateral groove according to present invention can compensate for this length reduction, and thus can suppress reduction in driving stability on a wet road surface.

### BRIEF DESCRIPTION OF THE DRAWINGS

Fig. 1 is a developed partial view of a tread surface of a pneumatic tire according to an embodiment of the present invention.
Fig. 2 is an enlarged cross-sectional view of each first lateral groove.
Fig. 3 is a half end view of the pneumatic tire shown in Fig. 1.

### DESCRIPTION OF THE PREFERRED EMBODIMENT

Hereinafter, a detailed description will be given of an embodiment of the present invention with reference to the accompanying drawings.

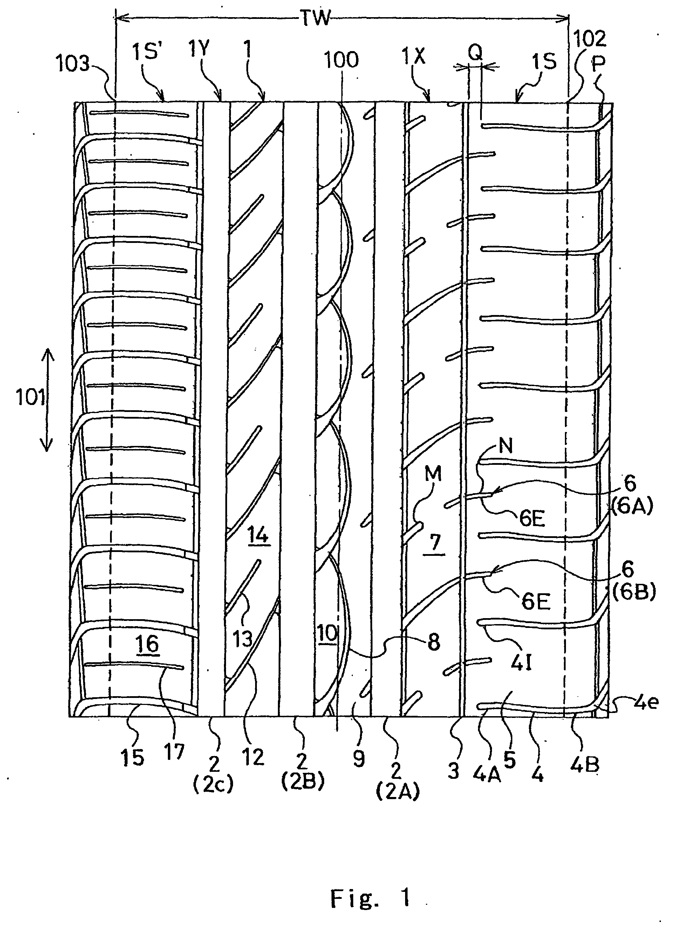

Fig. 1 shows an embodiment of a pneumatic tire according to the present invention. The pneumatic tire is designed to be mounted on a vehicle in a specific tire mounting direction. Specifically, the pneumatic tire is designed to be mounted on a vehicle with the right side thereof in Fig. 1, with respect to a tire equatorial plane 100, facing outside the vehicle.

In a tread surface 1, three circumferential-direction main grooves 2 are provided. Each circumferential-direction main groove 2 extends linearly in a tire circumferential direction 101. The tread surface 1 has an outer regions 1X and an inner region 1Y respectively located at the outer side and the inner side of the tire equatorial plane 100 in the tire mounting direction. The three circumferential-direction grooves 2 are a first circumferential-direction main groove 2A placed in the outer region 1X, and two circumferential-direction main grooves 2B and 2C placed in the inner region 1Y. Among the two circumferential-direction main grooves 2B and 2C, the second circumferential-direction main groove 2B is located closer to the tire equatorial plane 100, while the third circumferential-direction main groove 2C is located outwardly away from the second circumferential-direction main groove 2B in the tire width direction.

In addition, a circumferential-direction narrow groove 3 is placed at the outer side of the first circumferential-direction main groove 2A in the tire width direction. The circumferential-direction narrow groove 3 extends linearly in the tire circumferential direction 101, and is narrower than the first circumferential-direction main groove 2A (has a width of 5 mm to 7 mm). The outer region with respect to the circumferential-direction narrow groove 3 in the tire width direction is a shoulder region 1S of the tread surface 1. In the shoulder region 1S, first lateral grooves 4 are arranged side by side at predetermined equal intervals in the tire circumferential direction 101. Each first lateral groove 4 extends in the tire width direction across a contact patch edge 102 on one side of the tire.

The first lateral grooves 4 do not communicate with the circumferential-direction narrow groove 3, but are separated therefrom. Thereby, an outer land portion with respect to the circumferential-direction narrow groove 3 in the tire width direction is formed as a rib 5 extending continuously in the tire circumferential direction 101. The first lateral groove 4 has an S-shape formed by contiguously connecting a first arcuate groove portion 4A and a second arcuate groove portion 4B. The first arcuate groove portion 4A is convex toward one side in the tire circumferential direction 101 (toward the upper side of Fig. 1), while the second arcuate groove portion 4B is convex toward the other side in the tire circumferential direction 101 (toward the lower side of Fig. 1).

Additionally, second lateral grooves 6 are arranged side by side at predetermined equal intervals in the tire circumferential direction 101. Each second lateral groove 6 extends from the first circumferential-direction main groove 2A outwardly in the tire width direction across the circumferential-direction narrow groove 3. The second lateral groove 6 extends inclined with respect to the tire width direction. Moreover, the second lateral grooves 6 are placed offset from the first lateral grooves 4 in the tire circumferential direction 101 so that a portion, extending outwardly from the circumferential-direction narrow groove 3, of each second lateral groove 6 may not intersect with any of the first lateral grooves 4. The second lateral grooves 6 extend so that outer ends 6E thereof can overlap inner ends 4I of the respective first lateral grooves 4 when viewed in the tire circumferential direction 101.

As the second lateral grooves 6, second lateral grooves 6A and second lateral grooves 6B are alternately arranged in the tire circumferential direction 101. Each second lateral groove 6A is formed of a lateral groove portion M and a lateral groove portion N. The lateral groove portion M extends from the first circumferential-direction main groove 2A to a middle portion of a region between the circumferential-direction narrow groove 3 and the first circumferential-direction main groove 2A. The lateral groove portion N extends outwardly from a point apart from the lateral groove portion M and across the circumferential-direction narrow groove 3. Meanwhile, each second lateral groove 6B extends continuously and outwardly from the first circumferential-direction main groove 2A across the circumferential-direction narrow groove 3. Thereby, between the first circumferential-direction main groove 2A and the circumferential-direction narrow groove 3, formed are blocks 7 each of which is defined by two adjacent second lateral grooves 6B. The pattern increases the stiffness of the blocks 7 in the tire circumferential direction 101, and thus increases driving stability on a dry road surface.

In addition, multiple sub grooves 8 are contiguously connected to the second circumferential-direction main groove 2B. Each sub groove 8 extends in the tire circumferential direction 101 so as to form an arcuate line crossing the tire equatorial plane 100. Thereby, a rib 9 and blocks 10 are formed between the first and second circumferential-direction grooves 2A and 2B. Specifically, the rib 9 is defined by the multiple sub grooves 8 and the first circumferential-direction main groove 2A, while each block 10 is defined by the second circumferential-direction main groove 2B and some of the sub grooves 8.

Between the second and third circumferential-direction main grooves 2B and 2C in the inner region 1Y, third lateral grooves 12 and fourth lateral grooves 13 are alternately arranged side by side at predetermined equal intervals in the tire circumferential direction 101. Each third lateral groove 12 extends inclined with respect to the tire width direction so as to communicate with both the circumferential-direction main grooves 2B and 2C. Each fourth lateral groove 13 extends inclined with respect to the tire width direction from the third circumferential-direction main groove 2C to a middle portion of a region between the circumferential-direction main grooves 2B and 2C. Thereby, blocks 14 are formed each of which is defined by two adjacent third lateral grooves 12 and the circumferential-direction main grooves 2B and 2C.

In the inner region 1Y, the outer region with respect to the third circumferential-direction main groove 2C in the tire width direction is a shoulder region 1S'. In the shoulder region 1S', fifth lateral grooves 15 are arranged side by side at predetermined equal intervals in the tire circumferential direction 101. Each fifth lateral groove 15 extends from the third circumferential-direction main groove 2C outwardly in the tire width direction across a contact patch edge 103 on the other side of the tire. Thereby, blocks 16 are formed each of which is defined by two adjacent fifth lateral grooves 15 and the third circumferential-direction main groove 2C. In each block 16, provided is a sipe 17 extending in the tire width direction.

According to the present invention described above, the first lateral grooves 4 are separated from the circumferential-direction narrow groove 3, and thus the outer land portion with respect to the circumferential-direction narrow groove 3 in the tire width direction is formed as the rib 5. The pattern can increase the tread stiffness in the tire circumferential direction 101 as compare to a pattern in which the first lateral grooves 4 communicate with the circumferential-direction narrow groove 3 to define blocks. Accordingly, the present invention can increase driving stability on a dry road surface.

Meanwhile, each first lateral groove 4 is formed by contiguously connecting the first arcuate groove portion 4A, which is convex toward one side in the tire circumferential direction 101, and the second arcuate groove portion 4B, which is convex toward the other side in the tire circumferential direction 101. This makes the first lateral groove 4 longer than a lateral groove which is convex only toward one side. Here, the length of each first lateral groove 4 is considered to be reduced by a distance by which the first lateral groove 4 is separated from the circumferential-direction narrow groove 3. However, the shape of the first lateral groove 4 according to present invention can compensate for this length reduction, and thus can suppress reduction in driving stability on a wet road surface.

In the present invention, a distance Q by which the first lateral groove 4 is separated from the circumferential-direction narrow groove 3 should preferably have a length of 3 mm to 15 mm, when measured in the tire width direction. The distance Q shorter than 3 mm is insufficient for effectively increasing the stiffness of the rib 5, but the distance Q longer than 15 mm reduces driving stability on a wet road surface.

In this embodiment, the first lateral groove 4, formed by contiguously connecting the first and second arcuate groove portions 4A and 4B, extends across the contact patch edge 102 of the tire, and thus an outer end 4e of the first lateral groove 4 is located at the outer side of the contact patch edge 102 of the tire in the tire width direction. Here, a region of the tread surface 1 even including an outer region with respect to the contact patch edge 102 of the tire comes into contact with a road surface at the time of cornering. Accordingly, the first lateral groove 4, formed by contiguously connecting the first and second arcuate groove portions 4A and 4B, may extend so that the outer end 4e can be located at the outer side of the contact patch edge 102 of the tire as in this embodiment. The position of the outer end 4e may be set within a range from a point immediately at the outer side of the contact patch edge 102 of the tire to a point P outwardly away from the contact patch edge 102 of the tire in the tire width direction. Here, the distance from the contact patch edge 102 of the tire to the point P may be set to 10% of a tire contact width TW, which is the length between the contact patch edges 102 and 103 of the tire, when measured in the tire axial direction.

The radius of curvature of the first arcuate groove portion 4A should preferably be set within a range from 60 mm to 360 mm. Setting the radius of curvature of the first arcuate groove portion 4A smaller than 60 mm reduces the stiffness of a portion of the rib 5 adjacent to the first arcuate groove portion 4A, and thus adversely affects driving stability on a dry road surface. On the other hand, setting this radius of curvature larger than 360 mm greatly reduces driving stability on a wet road surface.

The radius of curvature of the second arcuate groove portion 4B should preferably be set within a range from 30 mm to 720 mm for the same reason as the above.

The distance between the convex vertices respectively of the first and second arcuate groove portions 4A and 4B in the tire circumferential direction should preferably have a length TL within a range from 10 mm to 40 mm. The length TL in the tire circumferential direction either smaller than 10 mm or larger than 40 mm greatly reduces driving stability on a wet road surface.

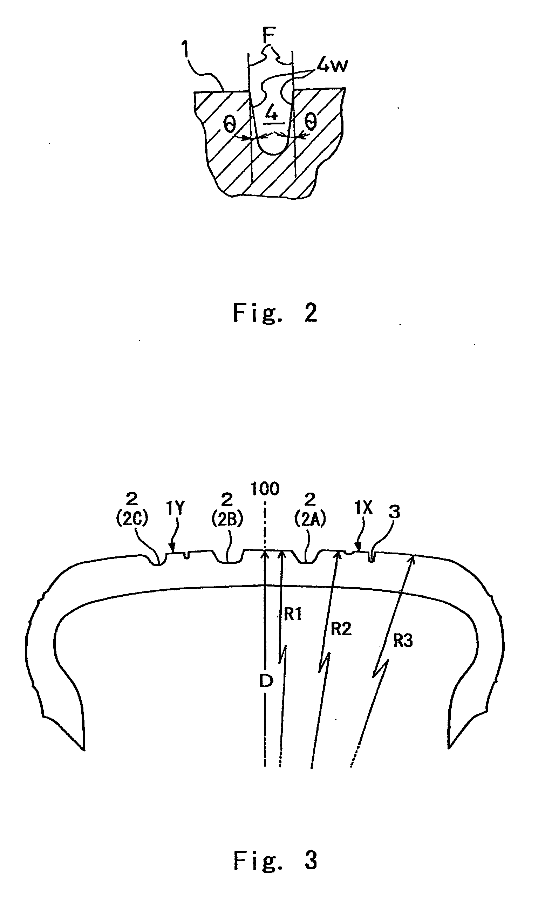

As shown in Fig. 2, an angle θ which each groove wall 4w of the first lateral grooves 4 forms with a tire normal direction (direction of a normal line F drawn perpendicular to the tread surface 1 at the opening end of the groove wall 4w) should preferably be θ to 5°. The groove wall angle θ smaller than 0° reduces the stiffness of a portion of the rib 5 adjacent to the first lateral groove 4, and thus reduces driving stability. On the other hand, the groove wall angle θ larger than 5 causes the first lateral groove 4 to have a too large width, and thus reduces a contact area of the rib 5, which consequently reduces driving stability.

In the contact patch of the tread, the proportion of a groove area in the outer region 1X of the tread surface 1 should preferably be 10% to 15% lower than that in the inner region 1Y of the tread surface 1, in order to improve driving stability on a dry road surface and driving stability on a wet road surface while balancing therebetween.

In order to balance between driving stability on a dry road surface and driving stability on a wet road surface, the widths respectively of the three circumferential-direction main grooves 2A to 2C should preferably be set as follows. Specifically, the width of the first circumferential-direction main groove 2A should preferably be larger than that of the third circumferential-direction groove 2C, and the width of the second circumferential-direction main groove 2B should preferably be equal to or larger than that of the first circumferential-direction groove 2A. Moreover, the widths of the first to third circumferential-direction main grooves 2A to 2C should preferably be respectively within a range from 95% to 105%, a range from 100% to 110%, and a range from 85% to 100% of the average width of the three circumferential-direction main grooves 2A to 2C. For reference, the average width of the three circumferential-direction main grooves 2A to 2C may be set to 10 mm to 20 mm.

The tread surface in the outer region 1X should preferably have a cross section in the tire circumferential direction 110 as shown in Fig. 3, that is, a cross section formed of first to third arcs respectively having different curvatures R1 to R3 and connected contiguously in this order from the inner side to the outer side. Specifically, the curvatures R1 to R3 should preferably be set to values satisfying R1 > R2 > R3, and the ratios of these curvatures R1 to R3 to an outside diameter (distance across) D of the tire should preferably be set to R1/D = 180% to 220%, R2/D = 160% to 200%, and R3/D = 90% to 130%, respectively. Forming the tread surface in the outer region 1X as described above causes the tire surface to more closely conform to a dry road surface, and thus can improve driving stability thereon.

The present invention may be particularly favorably applied to a pneumatic tire for a passenger vehicle. Note that the contact patch edges 102 and 103 of the tire in the present invention are measured under the conditions where the tire is fitted onto a standard rim specified in the Japan Automobile Tire Manufacturers Association, inc. (JATMA), then inflated to an air pressure of 60% of that corresponding to the maximum load carrying capacity specified in JATMA, and thereafter subjected to a load equivalent to 60% of the maximum load carrying capacity. Note that, when a tire not specified in JATMA but specified in the Tire and Rim Association, Inc. (TRA) in the U.S. or in the European Tyre and Rim Technical Organisation (ETRTO) is used, the contact patch edges 102 and 103 are similarly measured according to the specifications of TRA or ETRTO.

### Examples I

As test tires, tires 1 to 4 (Examples 1 to 4) according to the present invention and a reference tire (Reference Example), all of which commonly had a size of 275/45R20, were manufactured. Each of the tires 1 to 4 had a structure shown in Fig. 1, in which the first lateral grooves were separated from the circumferential-direction narrow groove, and thus the outer land portion with respect to the circumferential-direction narrow groove in the tire width direction was formed as a rib. In addition, each first lateral groove was formed by contiguously connecting the first arcuate groove portion, which is convex toward one side in the tire circumferential direction, and the second arcuate groove portion, which is convex toward the other side in the tire circumferential direction. In these tires 1 to 4, the distances Q by which each first lateral groove is separated from the circumferential-direction narrow groove 3 were set to values shown in Table 1. By contrast, the reference tire had a conventional structure different from that according to the tyre 2 in that each first lateral groove was formed only of the first arcuate groove portion and communicated with the circumferential-direction narrow groove.

In all these test tires, the following conditions were commonly employed: the difference in the proportion of a groove area between the outer and inner regions of the tread surface was 8%; the groove wall angle of each first lateral groove was 5°; the width of the circumferential-direction narrow groove was 3 mm; and the widths of the first to third circumferential-direction main grooves were 107%, 108% and 83% of the average width of the three circumferential-direction main grooves, respectively.

In the tires 1 to 4 according to the present invention, the following conditions were commonly employed: the radius of curvatures of the first and second arcuate groove portions were 120 mm and 180 mm, respectively; and the distance between the convex vertices respectively of the first and second arcuate groove portions in the tire circumferential direction had a length of 15 mm.

Each of these test tires was fitted onto a rim of a wheel having a rim size of 20×9J, and then inflated to an air pressure either of 260 kPa for front wheel or of 290 kPa for rear wheel. The tire and wheel was then mounted on a test vehicle with a displacement of 4500 cc. Under these conditions, tests for evaluating dry driving stability and wet driving stability were conducted by the following methods. Table 1 shows the test results.

### [Dry Driving Stability]

A sensory test on driving stability was conducted by a test driver driving the test vehicle on a dry road test course.

Table 1 shows the evaluation results in the form of indices based on the reference tire = 100. The larger index value indicates that the corresponding tire provides better driving stability on a dry road surface.

### [Wet Driving Stability]

A sensory test on driving stability was conducted by a test driver driving the test vehicle on a wet road test course. Table 1 shows the evaluation results in the form of indices based on the reference tire = 100. The larger index value indicates that the corresponding tire provides better driving stability on a wet road surface. Note that a tire within an index range of 100 ± 2 is regarded to provide the same driving stability as that of the reference tire.

**Table 1**

| | Reference Example | Example 1 | Example 2 | Example 3 | Example 4 |
|---|---|---|---|---|---|
| Distance Q (mm) | 0 | 3 | 6 | 10 | 15 |
| Dry Driving Stability | 100 | 103 | 104 | 105 | 107 |
| Wet Driving Stability | 100 | 99 | 99 | 98 | 98 |

Table 1 shows that the tires according to the present invention can improve driving stability on a dry road surface, while suppressing reduction in driving stability on a wet road surface.

### Examples II

As test tires, tires 5 to 17 (Examples 5 to 17) according to the present invention, all of which commonly had a size of 275/45R20, were manufactured. Each of the tires 5 to 17 had a structure shown in Fig. 1, in which the first lateral grooves were separated from the circumferential-direction narrow groove, and thus the outer land portion with respect to the circumferential-direction narrow groove in the tire width direction was formed as a rib. In addition, each first lateral groove was formed by contiguously connecting the first arcuate groove portion, which is convex toward one side in the tire circumferential direction, and the second arcuate groove portion, which is convex toward the other side in the tire circumferential direction. In these tires 5 to 17, the ratios of the widths of the first to third circumferential-direction main grooves to the average width of the three circumferential-direction main grooves, as well as the ratios of the curvatures of the first to third arcs to the tire outside diameter were set to values shown in Tables 2-1 and 2-2.

In these test tires, the following conditions were commonly employed: the difference in the proportion of a groove area between the outer and inner regions of the tread surface was 8%; the groove wall angle of each first lateral groove was 5°; and the width of the circumferential-direction narrow groove was 3 mm.

In addition, the following conditions were commonly employed as well: the radius of curvatures of the first and second arcuate groove portions were 120 mm and 180 mm, respectively; and the distance between the convex vertices respectively of the first and second arcuate groove portions in the tire circumferential direction had a length of 15 mm.

Each of these test tires was fitted onto a rim of a wheel having a rim size of 20x9J, and then inflated to an air pressure either of 260 kPa for front wheel or of 290 kPa for rear wheel. The tire and wheel was then mounted on a test vehicle with a displacement of 4800 cc. Under these conditions, tests for evaluating dry driving stability and wet driving stability were conducted by the same methods as in the foregoing [Examples I]. Tables 2-1 and 2-2 show the test results. Note that Tables 2-1 and 2-2 each show the evaluation results in the form of indices based on the tire 5 (Example 5) according to the present invention = 100.

**Table 2-1**

| | Example 5 | Example 6 | Example 7 | Example 8 | Example 9 | Example 10 | Example 11 |
|---|---|---|---|---|---|---|---|
| Width Ratio of First Circumferential-direction Main Groove (%) | 101 | 90 | 110 | 100 | 100 | 100 | 100 |
| Width Ratio of Second Circumferential-direction Main Groove (%) | 102 | 105 | 105 | 90 | 120 | 105 | 105 |
| Width Ratio of Third Circumferential-direction Main Groove (%) | 98 | 95 | 95 | 95 | 95 | 80 | 105 |
| Curvature Ratio of First Arc (%) | 211 | | | | | | |
| Curvature Ratio of Second Arc (%) | 184 | | | | | | |
| Curvature Ratio of Third Arc (%) | 118 | | | | | | |
| Dry Driving Stability | 100 | 102 | 98 | 102 | 97 | 101 | 98 |
| Wet Driving Stability | 100 | 98 | 102 | 98 | 102 | 98 | 102 |

**Table 2-2**

| | Examp le 5 | Example 12 | Example 13 | Example 14 | Example 15 | Examp le 16 | Examp le 17 |
|---|---|---|---|---|---|---|---|
| Width Ratio of First Circumferential-direction Main Groove (%) | 101 | | | | | | |
| Width Ratio of Second Circumferential-direction Main Groove (%) | 102 | | | | | | |
| Width Ratio of Third Circumferential-direction Main Groove (%) | 98 | | | | | | |
| Curvature Ratio of First Arc (%) | 211 | 160 | 240 | 211 | 211 | 211 | 211 |
| Curvature Ratio of Second Arc (%) | 184 | 184 | 184 | 140 | 220 | 184 | 184 |
| Curvature Ratio of Third Arc (%) | 118 | 118 | 118 | 118 | 118 | 80 | 140 |
| Dry Driving Stability | 100 | 95 | 90 | 93 | 86 | 87 | 82 |
| Wet Driving Stability | 100 | 100 | 95 | 98 | 93 | 92 | 90 |

Table 2-1 shows that the tire 5 satisfying the elements claimed in claim 9 of the present invention provides better balance between driving stability on a dry road surface and driving stability on a wet road surface than the other tires 6 to 11 according to the present invention but not satisfying the elements claimed in claim 9.

Meanwhile, Table 2-2 shows that the tire 5 satisfying the elements claimed in claim 12 of the present invention provides more improved driving stability on a dry road surface than the other tires 12 to 17 according to the present invention but not satisfying the elements claimed in claim 12.

## Claims

1. A pneumatic tire designed to be mounted in a specific tire mounting direction to cause a designated side of the pneumatic tire to face outside of a vehicle, the pneumatic tire comprising:
a first circumferential-direction main groove (2A) placed in an outer region of a tread surface (1), the outer region being located at an outer side of a tire equatorial plane in the tire mounting direction;
a circumferential-direction narrow groove (3) having a smaller width than the first circumferential-direction main groove (2A), and placed at an outer side of the first circumferential-direction main groove (2A) in a tire width direction; and
first lateral grooves (4) provided in an outer region with respect to the circumferential-direction narrow groove (3) in the tire width direction so as to be placed side by side at predetermined equal intervals in the tire circumferential direction (101), each of the first lateral grooves (4) extending in the tire width direction across a contact patch edge of the pneumatic tire, **characterised in that**
the first lateral grooves (4) are separated from the circumferential-direction narrow groove (3), so that an outer land portion with respect to the circumferential-direction narrow groove (3) in the tire width direction is formed as a rib (5), and
each of the first lateral grooves (4) is formed by contiguously connecting a first arcuate groove portion (4A), which is convex toward one side in the tire circumferential direction, and a second arcuate groove portion (4B), which is convex toward the other side in the tire circumferential direction (101).

2. The pneumatic tire according to claim 1, wherein a distance by which each first lateral groove (4) is separated from the circumferential-direction narrow groove (3) has a length of 3 mm to 15 mm in the tire width direction.

3. The pneumatic tire according to claim 1 or 2, wherein
the first arcuate groove portion (4A) has a radius of curvature of 60 mm to 360 mm, and
the second arcuate groove portion (4B) has a radius of curvature of 30 mm to 720 mm.

4. The pneumatic tire according to any one of claims 1 to 3, wherein a distance between convex vertices respectively of the first and second arcuate groove portions (4A,4B) in the tire circumferential direction (101) has a length of 10 mm to 40 mm.

5. The pneumatic tire according to any one of claims 1 to 4, further comprising:
second lateral grooves (6) arranged side by side at predetermined equal intervals in the tire circumferential direction (101) so as to be offset from the first lateral grooves (4) in the tire circumferential direction (101); each of the second lateral grooves (6) extending from the first circumferential-direction main groove (2A) outwardly in the tire width direction across the circumferential-direction narrow groove (3), wherein
every other one of the second lateral grooves (6) arranged side by side in the tire circumferential direction (101) is formed of two lateral groove portions (M,N), one of the lateral groove portions (M) extending from the first circumferential-direction main groove (2A) to a middle portion of a region between the circumferential-direction narrow groove (3) and the first circumferential-direction main groove (2A), the other lateral groove portion (N) extending outwardly from a point apart from the former lateral groove portion (M) and across the circumferential-direction narrow groover (3),
each of the remaining second lateral grooves (6) extends continuously and outwardly from the first circumferential-direction main groove (2A) across the circumferential-direction narrow groove (3), and
thereby, between the first circumferential-direction main groove (2A) and the circumferential-direction narrow groove (3) formed are blocks (7) each defined by adjacent two of the second lateral grooves (6) extending continuously across the circumferential-direction narrow groove (3).

6. The pneumatic tire according to claim 5, wherein the second lateral grooves (6) extend so that outer ends thereof overlap inner ends of the respective first lateral grooves (4) when viewed in the tire circumferential direction (101).

7. The pneumatic tire according to any one of claims 1 to 6, wherein, each of groove walls of the first lateral grooves (4) forms an angle θ of 0° to 5° with a tire normal direction.

8. The pneumatic tire according to any one of claims 1 to 7, wherein the circumferential-direction narrow groove (3) has a width of 5 mm to 7 mm, and extends linearly in the tire circumferential direction (101).

9. The pneumatic tire according to any one of claims 1 to 8, further comprising
a second circumferential-direction main groove (2B) and a third circumferential-direction main groove (2C) each extending in the tire circumferential direction (101) and placed in an inner region of the tread surface (1), the inner region being located at an inner side of the tire equatorial plane in the tire mounting direction, the second circumferential-direction main groove (2B) being located closer to the tire equatorial plane (100), the third circumferential-direction main groove (2C) being located outwardly away from the second circumferential-direction main groove (2B) in the tire width direction, wherein
the width of the first circumferential-direction main groove (2A), is set larger than that of the third circumferential-direction groove (2C),
the width of the second circumferential-direction main groove (2B) is set equal to or larger than that of the first circumferential-direction groove (2A); and
the widths of the first to third circumferential-direction main grooves (2A, 2B, 2C) are respectively within a range from 95% to 105%, a range from 100% to 110%, and a range from 85% to 100% of the average width of the three circumferential-direction main grooves (2A, 2B, 2C).

10. The pneumatic tire according to claim 9, further comprising:
a plurality of sub grooves (8) contiguously connected to the second circumferential-direction main groove (2B), each of the sub grooves (8) extending in the tire circumferential direction (101) so as to form an arcuate line crossing the tire equatorial plane (100);
third lateral grooves (12) each extending in the tire width direction so as to communicate with both the second and third circumferential-direction main grooves (2B,2C);
fourth lateral grooves (13), each extending in the tire width direction from the third circumferential-direction main groove (2C) to a middle portion of a region between the second and third circumferential-direction main grooves (2B,2C), the third lateral grooves (12) and the fourth lateral grooves (13) being alternately arranged side by side at predetermined equal intervals in the tire circumferential direction (101); and
fifth lateral grooves (15) arranged side by side at predetermined equal intervals in the tire circumferential direction (101), each of the fifth lateral grooves (15) extending from the third circumferential-direction main groove (2C) outwardly in the tire width direction across a contact patch edge of the tire, wherein
between the first and second circumferential-direction main grooves (2A, 2B), thus formed are a rib defined by the plurality of sub grooves (8) and the first circumferential-direction main groove (2A); and blocks each defined by the second circumferential-direction main groove (2B) and some of the plurality of sub grooves (8);
between the second and third circumferential-direction main grooves (2B, 2C); thus formed are blocks defined by the second and third circumferential-direction main grooves (2B, 2C) and adjacent two of the third lateral grooves (12); and
blocks (16) are thus formed each of which is defined by the third circumferential-direction main groove (2C) and each adjacent two of the fifth lateral grooves (15).

11. The pneumatic tire according to claim 10, wherein a proportion of a groove area in the outer region of the tread surface (1) is 10% to 15% lower than that in the inner region of the tread surface (1).

12. The pneumatic tire according to any one of claims 1 to 10, wherein the tread surface (1), in the outer region has a cross section in the tire circumferential direction (101) formed of first to third arcs respectively having different curvatures and connected contiguously in this order from an inner side to an outer side, the curvatures of the first to third arcs being set to values satisfying R1 > R2 > R3, ratios of the curvatures to an outside diameter of the pneumatic tire being set to R1/D= 180% to 220%, R2/D = 160% to 200%, and R3/D = 90% to 130%, respectively, where R1 to R3 respectively denote the curvatures of the first to third arcs, and D denotes the outside diameter of the pneumatic tire.

## Patentansprüche

1. Luftreifen, der ausgelegt ist, um in einer speziellen Reifenanbringrichtung angebracht zu werden, so dass eine ausgewiesene Seite des Luftreifens veranlasst wird, bezüglich des Fahrzeugs nach außen zu zeigen, wobei der Luftreifen aufweist:
eine erste Hauptrille der Umfangsrichtung (2A), die in einem äußeren Bereich einer Lauffläche (1) angeordnet ist, wobei der äußere Bereich auf einer Außenseite einer Reifenäquatorebene in der Reifenanbringrichtung vorgesehen ist;
eine schmale Rille der Umfangsrichtung (3), welche eine geringere Breite als die erste Hauptrille der Umfangsrichtung (2A) aufweist und auf einer Außenseite der ersten Hauptrille der Umfangsrichtung (2A) in einer Reifenbreitenrichtung angeordnet ist; und
erste seitliche Rillen (4), die so in einem äußeren Bereich bezüglich der schmalen Rille in Umfangsrichtung (3) in der Reifenbreitenrichtung vorgesehen sind, dass diese in einem bestimmten gleichmäßigen Abstand in der Reifenumfangsrichtung (101) Seite an Seite angeordnet sind, wobei jede der ersten seitlichen Rillen (4) sich in der Reifenbreitenrichtung über einen Kontaktstellerand des Luftreifens hinaus erstreckt, **dadurch gekennzeichnet, dass**
die ersten seitlichen Rillen (4) so von der schmalen Rille in Umfangsrichtung (3) getrennt sind, dass ein äußerer Bodenabschnitt bezüglich der schmalen Rille in Umfangsrichtung (3) in der Reifenbreitenrichtung als Rippe (5) ausgebildet ist, und
jede der ersten seitlichen Rillen (4) durch zusammenhängendes Verbinden eines ersten gebogenen Rillenabschnitts (4A), der zu einer Seite in der Reifenumfangsrichtung konvex ist, und eines zweiten gebogenen Rillenabschnitts (4B), der zur anderen Seite in der Reifenumfangsrichtung (101) konvex ist, ausgebildet ist.

2. Luftreifen nach Anspruch 1, bei dem ein Abstand, um den die erste seitliche Rille (4) von der schmalen Rille in Umfangsrichtung (3) getrennt ist, eine Länge von 3 mm bis 15 mm in der Reifenbreitenrichtung aufweist.

3. Luftreifen nach Anspruch 1 oder 2, bei dem
der erste gebogene Rillenabschnitt (4A) einen Krümmungsradius von 60 mm bis 360 mm aufweist, und
der zweite gebogene Rillenabschnitt (4B) einen Krümmungsradius von 30 mm bis 720 mm aufweist.

4. Luftreifen nach einem der Ansprüche 1 bis 3, bei dem ein Abstand zwischen jeweils konvexen Scheitelpunkten der ersten und zweiten gebogenen Rillenabschnitte (4A, 4B) in der Reifenumfangsrichtung (101) eine Länge von 10 mm bis 40 mm aufweist.

5. Luftreifen nach einem der Ansprüche 1 bis 4, der ferner aufweist:
zweite seitliche Rillen (6), die in bestimmten gleichmäßigen Abständen Seite an Seite in der Reifenumfangsrichtung (101) angeordnet sind, so dass diese von den ersten seitlichen Rillen (4) in der Reifenumfangsrichtung (101) versetzt sind, wobei jede der zweiten seitlichen Rillen (6) sich von der ersten Hauptrille in Umfangsrichtung (2A) in der Reifenbreitenrichtung über die schmale Rille in Umfangsrichtung (3) hinweg nach außen erstreckt, wobei
jede zweite der seitlichen Rillen (6), die in der Reifenumfangsrichtung (101) Seite an Seite angeordnet sind, aus zwei seitlichen Rillenabschnitten (M, N) ausgebildet ist, wobei sich einer der seitlichen Rillenabschnitte (M) von der ersten Hauptrille in Umfangsrichtung (2A) zu einem mittleren Abschnitt eines Bereichs zwischen der schmalen Rille in Umfangsrichtung (3) und der ersten Hauptrille in Umfangsrichtung (2A) erstreckt, der andere seitliche Rillenabschnitt (N) sich von einem Punkt entfernt von dem ersten seitlichen Rillenabschnitt (M) nach außen und über die schmale Rille in Umfangsrichtung (3) hinweg erstreckt,
jede der verbleibenden zweiten seitlichen Rillen (6) sich von der ersten Hauptrille in Umfangsrichtung (2A) kontinuierlich nach außen erstreckt, über die schmale Rille in Umfangsrichtung (3) hinweg, und
**dadurch** zwischen der ersten Hauptrille in Umfangsrichtung (2A) und der schmalen Rille in Umfangsrichtung (3) Blöcke (7) ausgebildet sind, welche jeweils durch benachbarte zwei der zweiten seitlichen Rillen (6) definiert werden, die sich kontinuierlich über die schmale Rille in Umfangsrichtung (3) hinweg erstrecken.

6. Luftreifen nach Anspruch 5, bei dem sich die zweiten seitlichen Rillen (6) so erstrecken, dass äußere Enden davon sich mit inneren Enden der entsprechenden ersten seitlichen Rillen (4) überlappen, betrachtet in der Reifenumfangsrichtung (101).

7. Luftreifen nach einem der Ansprüche 1 bis 6, bei dem jede der Rillenwände der ersten seitlichen Rillen (4) einen Winkel θ von 0° bis 5° bezüglich der Reifennormalenrichtung ausbilden.

8. Luftreifen nach einem der Ansprüche 1 bis 7, bei dem die schmale Rille in Umfangsrichtung (3) eine Breite von 5 mm bis 7 mm aufweist und sich linear in der Reifenumfangsrichtung (101) erstreckt.

9. Luftreifen nach einem der Ansprüche 1 bis 8, ferner aufweisend
eine zweite Hauptrille in Umfangsrichtung (2B) und eine dritte Hauptrille in Umfangsrichtung (2C), die sich jeweils in der Reifenumfangsrichtung (101) erstrecken und in einem inneren Bereich der Lauffläche (1) angeordnet sind, wobei der innere Bereich auf der Innenseite der Reifenäquatorebene in der Reifenanbringrichtung vorgesehen ist, die zweite Hauptrille in Umfangsrichtung (2B) näher an der Reifenäquatorebene (100) angeordnet ist, die dritte Hauptrille in Umfangsrichtung (2C) nach außen entfernt von der zweiten Hauptrille in Umfangsrichtung (2B) in der Reifenbreitenrichtung angeordnet ist, wobei
die Breite der ersten Hauptrille in Umfangsrichtung (2A) größer als die der dritten Hauptrille in Umfangsrichtung (2C) festgelegt ist,
die Breite der zweiten Hauptrille in Umfangsrichtung (2B) gleich oder größer als die der ersten Hauptrille in Umfangsrichtung (2A) festgelegt ist, und
die Breiten der ersten bis dritten Hauptrillen in Umfangsrichtung (2A, 2B, 2C) sich entsprechend in einem Bereich von 95% bis 105%, einem Bereich von 100% bis 110% und einem Bereich von 85% bis 100% der durchschnittlichen Breite der drei Hauptrillen in Umfangsrichtung (2A, 2B, 2C) befinden.

10. Luftreifen nach Anspruch 9, der ferner aufweist:
eine Mehrzahl von Nebenrillen (8), die an die zweite Hauptrille in Umfangsrichtung (2B) angrenzen, wobei jede der Nebenrillen (8) sich in der Reifenumfangsrichtung (101) erstreckt, um eine gebogene Linie auszubilden, welche die Reifenäquatorebene (100) quert;
dritte seitliche Rillen (12), die sich jeweils in der Reifenbreitenrichtung erstrecken, um sowohl mit der zweiten als auch der dritten Hauptrille in Umfangsrichtung (2B, 2C) zu kommunizieren;
vierte seitliche Rillen (13), die sich jeweils von der dritten Hauptrille in Umfangsrichtung (2C) in der Reifenbreitenrichtung zu einem mittleren Abschnitt eines Bereichs zwischen den zweiten und dritten Hauptrillen in Umfangsrichtung (2B, 2C) erstrecken, wobei die dritten seitlichen Rillen (12) und die vierten seitlichen Rillen (13) in bestimmten gleichmäßigen Abständen in der Reifenumfangsrichtung (101) abwechselnd Seite an Seite angeordnet sind; und
fünfte seitliche Rillen (15), die in bestimmten gleichmäßigen Abständen in der Reifenumfangsrichtung (101) Seite an Seite angeordnet sind, wobei jede der fünften seitlichen Rillen (15) sich von der dritten Hauptrille in Umfangsrichtung (2C) in der Reifenbreitenrichtung nach außen über einen Kontaktstellenrand des Reifens hinweg erstreckt,
zwischen den ersten und zweiten Hauptrillen in Umfangsrichtung (2A, 2B) auf diese Weise Rippen, welche von der Mehrzahl von Nebenrillen (8) und der ersten Hauptrille in Umfangsrichtung (2A) definiert werden, und Blöcke ausgebildet werden, die jeweils von der zweiten Hauptrille in Umfangsrichtung (2B) und einigen der Mehrzahl von Nebenrillen (8) definiert werden,
zwischen den zweiten und dritten Hauptrillen in Umfangsrichtung (2B, 2C) somit Blöcke ausgebildet werden, welche von den zweiten und dritten Hauptrillen in Umfangsrichtung (2B, 2C) und benachbarten zwei der dritten seitlichen Rillen (12) definiert werden, und
somit Blöcke (16) ausgebildet werden, bei denen jeder von der dritten Hauptrille in Umfangsrichtung (2C) und jeweils zwei benachbarten der fünften seitlichen Rillen (15) definiert wird.

11. Luftreifen nach Anspruch 10, bei dem ein Anteil eines Rillenflächenbereichs in dem äußeren Bereich der Lauffläche (1) 10% bis 15% geringer als in dem inneren Bereich der Lauffläche (1) ist.

12. Luftreifen nach einem der Ansprüche 1 bis 10, bei dem die Lauffläche (1) in dem äußeren Bereich einen Querschnitt in der Reifenumfangsrichtung (101) aufweist, der aus ersten bis dritten Bögen ausgebildet ist, die entsprechend unterschiedliche Krümmungen aufweisen und in dieser Reihenfolge von einer Innenseite zu einer Außenseite aneinandergrenzen, wobei die Krümmungen der ersten bis dritten Bögen auf Werte festgelegt sind, die R1 > R2 > R3 erfüllen, wobei Verhältnisse der Krümmungen zu einem Außendurchmesser des Luftreifens entsprechend auf R1/D = 180% bis 220%, R2/D = 160% bis 200% und R3/D = 90% bis 130% festgelegt sind, wobei R1 bis R3 entsprechend die Krümmungsradien der ersten bis dritten Bögen bezeichnen und D den Außendurchmesser des Luftreifens bezeichnet.

## Revendications

1. Pneu pneumatique conçu pour être monté dans une direction de montage de pneu spécifique pour amener un côté désigné du bandage pneumatique à faire face à l'extérieur d'un véhicule, le pneu pneumatique comprenant :
une première rainure principale (2A) dans une direction circonférentielle placée dans une région extérieure d'une surface de bande de roulement (1), la région extérieure étant située au niveau d'un côté extérieur d'un plan équatorial de pneu dans la direction de montage de pneu ;
une rainure étroite (3) dans une direction circonférentielle ayant une largeur plus petite que la première rainure principale (2A) dans une direction circonférentielle, et placée au niveau d'un côté extérieur de la première rainure principale (2A) dans une direction circonférentielle dans une direction de largeur de pneu ; et
des premières rainures latérales (4) réalisées dans une région extérieure par rapport à la rainure étroite (3) dans une direction circonférentielle dans la direction de largeur de pneu afin d'être placées côte à côte à des intervalles égaux prédéterminés dans la direction circonférentielle de pneu (101), chacune des premières rainures latérales (4) s'étendant dans la direction de largeur de pneu d'un bout à l'autre d'un bord d'aire de contact du pneu pneumatique, **caractérisé en ce que**
les premières rainures latérales (4) sont séparées de la rainure étroite (3) dans une direction circonférentielle, de sorte qu'une partie de contact extérieure en ce qui concerne la rainure étroite (3) dans une direction circonférentielle, dans la direction de largeur de pneu, est formée comme une nervure (5) ; et
chacune des premières rainures latérales (4) est formée en reliant de façon contiguë une première partie de rainure curviligne (4A), qui est convexe vers un côté dans la direction circonférentielle de pneu, et une seconde partie de rainure curviligne (4B), qui est convexe vers l'autre côté dans la direction circonférentielle de pneu (101).

2. Pneu pneumatique selon la revendication 1, dans lequel une distance par laquelle chaque première rainure latérale (4) est séparée de la rainure étroite (3) dans une direction circonférentielle a une longueur de 3 mm à 15 mm dans la direction de largeur de pneu.

3. Pneu pneumatique selon la revendication 1 ou 2, dans lequel
la première partie de rainure curviligne (4A) a un rayon de courbure de 60 mm à 360 mm, et
la seconde partie de rainure curviligne (4B) a un rayon de courbure de 30 mm à 720 mm.

4. Pneu pneumatique selon l'une quelconque des revendications 1 à 3, dans lequel une distance entre des sommets convexes respectivement des première et seconde parties de rainure curvilignes (4A, 4B) dans la direction circonférentielle de pneu (101) a une longueur de 10 mm à 40 mm.

5. Pneu pneumatique selon l'une quelconque des revendications 1 à 4, comprenant en outre :
des secondes rainures latérales (6) agencées côte à côte à des intervalles égaux prédéterminés dans la direction circonférentielle de pneu (101) afin d'être décalées par rapport aux premières rainures latérales (4) dans la direction circonférentielle de pneu (101), chacune des secondes rainures latérales (6) s'étendant à partir de la première rainure principale (2A) dans une direction circonférentielle vers l'extérieur dans la direction de largeur de pneu d'un bout à l'autre de la rainure étroite (3) dans une direction circonférentielle, dans lequel
chaque autre rainure des secondes rainures latérales (6) agencées côte à côte dans la direction circonférentielle de pneu (101) est formée de deux parties de rainure latérale (M, N), une des parties de rainure latérale (M) s'étendant à partir de la première rainure principale (2A) dans une direction circonférentielle jusqu'à une partie médiane d'une région entre la rainure étroite (3) dans une direction circonférentielle et la première rainure principale (2A) dans une direction circonférentielle, l'autre partie de rainure latérale (N) s'étendant vers l'extérieur à partir d'un point espacé de la première partie de rainure latérale (M) et d'un bout à l'autre de la rainure étroite (3) dans une direction circonférentielle,
chacune des secondes rainures latérales restantes (6) s'étend de façon continue et vers l'extérieur à partir de la première rainure principale (2A) dans une direction circonférentielle d'un bout à l'autre de la rainure étroite (3) dans une direction circonférentielle, et
de ce fait, entre la première rainure principale (2A) dans une direction circonférentielle et la rainure étroite (3) dans une direction circonférentielle, des blocs (7) sont formés, chacun défini par deux rainures adjacentes des secondes rainures latérales (6) s'étendant de façon continue d'un bout à l'autre de la rainure étroite (3) dans une direction circonférentielle.

6. Pneu pneumatique selon la revendication 5, dans lequel les secondes rainures latérales (6) s'étendent de sorte que des extrémités extérieures de celles-ci chevauchent des extrémités intérieures des premières rainures latérales respectives (4) quand on regarde dans la direction circonférentielle de pneu (101).

7. Pneu pneumatique selon l'une quelconque des revendications 1 à 6, dans lequel, chacune de parois de rainure des premières rainures latérales (4) forme un angle θ de 0° à 5° avec une direction normale de pneu.

8. Pneu pneumatique selon l'une quelconque des revendications 1 à 7, dans lequel la rainure étroite (3) dans une direction circonférentielle a une largeur de 5 mm à 7 mm, et s'étend linéairement dans la direction circonférentielle de pneu (101).

9. Pneu pneumatique selon l'une quelconque des revendications 1 à 8, comprenant en outre
une deuxième rainure principale (2B) dans une direction circonférentielle et une troisième rainure principale (2C) dans une direction circonférentielle, chacune s'étendant dans la direction circonférentielle de pneu (101) et étant placée dans une région intérieure de la surface de bande de roulement (1), la région intérieure étant située au niveau d'un côté intérieur du plan équatorial de pneu dans la direction de montage de pneu, la deuxième rainure principale (2B) dans la direction circonférentielle étant située plus près du plan équatorial de pneu (100), la troisième rainure principale (2C) dans une direction circonférentielle étant située à l'extérieur en partance de la deuxième rainure principale (2B) dans une direction circonférentielle dans la direction de la largeur du pneu, dans lequel
la largeur de la première rainure principale (2A) dans une direction circonférentielle est fixée plus grande que celle de la troisième rainure (2C) dans une direction circonférentielle,
la largeur de la deuxième rainure principale (2B) dans une direction circonférentielle est fixée égale ou supérieure à celle de la première rainure principale (2A) dans une direction circonférentielle, et
les largeurs des première à troisième rainures principales (2A, 2B, 2C) dans une direction circonférentielle sont respectivement à l'intérieur d'une plage de 95 % à 105 %, une plage de 100 % à 110 % et une plage de 85 % à 100 % de la largeur moyenne des trois rainures principales (2A, 2B, 2C) dans une direction circonférentielle.

10. Pneu pneumatique selon la revendication 9, comprenant en outre :
une pluralité de rainures secondaires (8) reliées de façon contiguë à la deuxième rainure principale (2B) dans une direction circonférentielle, chacune des rainures secondaires (8) s'étendant dans la direction circonférentielle de pneu (101) de façon à former une ligne curviligne traversant le plan équatorial de pneu (100) ;
des troisièmes rainures latérales (12), chacune s'étendant dans la direction de la largeur du pneu de façon à communiquer tant avec les deuxièmes qu'avec les troisièmes rainures principales (2B, 2C) dans une direction circonférentielle ;
des quatrièmes rainures latérales (13), chacune s'étendant dans la direction de la largeur du pneu à partir de la troisième rainure principale (2C) dans une direction circonférentielle jusqu'à une partie médiane d'une région entre les deuxièmes et troisièmes rainures principales (2B, 2C) dans une direction circonférentielle, les troisièmes rainures latérales (12) et les quatrièmes rainures latérales (13) étant agencées en alternance côte à côte à des intervalles égaux prédéterminés dans la direction circonférentielle de pneu (101) ; et
des cinquièmes rainures latérales (15) agencées côte à côte à des intervalles égaux prédéterminés dans la direction circonférentielle de pneu (101), chacune des cinquièmes rainures latérales (15) s'étendant à partir de la troisième rainure principale (2C) dans une direction circonférentielle vers l'extérieur dans la direction de largeur de pneu d'un bout à l'autre d'un bord d'aire de contact du pneu, dans lequel
entre les premières et deuxièmes rainures principales (2A, 2B) dans une direction circonférentielle, une nervure, définie par la pluralité de rainures secondaires (8) et la première rainure principale (2A) dans une direction circonférentielle, et des blocs, chacun étant défini par la deuxième rainure principale (2B) dans une direction circonférentielle et certaines de la pluralité de rainures secondaires (8), sont ainsi formés,
entre les deuxièmes et troisièmes rainures principales (2B, 2C) dans une direction circonférentielle, des blocs définis par les deuxièmes et troisièmes rainures principales (2B, 2C) dans une direction circonférentielle et deux rainures adjacentes des troisièmes rainures latérales (12) sont ainsi formés, et
des blocs (16) sont ainsi formés, chacun d'eux étant défini par la troisième rainure principale (2C) dans une direction circonférentielle et chaque groupe de deux rainures adjacentes des cinquièmes rainures latérales (15).

11. Pneu pneumatique selon la revendication 10, dans lequel une proportion d'une zone de rainure dans la région extérieure de la surface de bande de roulement (1) est de 10 % à 15 % plus petite que celle dans la région intérieure de la surface de bande de roulement (1).

12. Pneu pneumatique selon l'une quelconque des revendications 1 à 10, dans lequel la surface de bande de roulement (1) dans la région extérieure a une section transversale dans la direction circonférentielle de pneu (101) formée de premier à troisième arcs ayant respectivement des courbures différentes et reliés de façon contiguë dans cet ordre depuis un côté intérieur jusqu'à un côté extérieur, les courbures des premier au troisième arcs étant fixées à des valeurs satisfaisant à R1 > R2 > R3, des rapports des courbures sur un diamètre extérieur du pneu pneumatique étant respectivement fixés à R1/D = 180 % à 220 %, R2/D = 160 % à 200 % et R3/D = 90 % à 130 %, où R1 à R3 désignent respectivement les courbures des premier au troisième arcs, et D désigne le diamètre extérieur du pneu pneumatique.
